# EUROPEAN PATENT APPLICATION

(11) **EP 0 612 034 A1**
(43) Date of publication of application: **24.08.1994**
(21) Application number: 94102067.9
(22) Date of filing: 10.02.1994
(51) Int. Cl.: G06K 7/10, G02B 26/10

(54) **Method for reading a bar code and a bar-code reader**

(30) Priority: 18.02.1993 FI 930726
(71) Applicant: HALTON SYSTEM OY, SF-18100 Heinola (FI)
(72) Inventor: Tähkänen, Pekka, SF-18150 Heinola (FI)
(74) Representative: Pellmann, Hans-Bernd, Dipl.-Ing.

(57) **Abstract**

The invention concerns a method and a device for reading a bar code from the face of an object. The ray of light (S₁) is brought from a source of light (10), preferably from a source of laser light, and the ray of light is deflected in a sector (β) onto a prism (13) in a plane (T₁). In the method, by means of the prism (13), the sweep beam (C₂) of the ray of light (S₂) is rotated so that, on departing from the prism (13), the ray of light (S₂) sweeps in a plane (T₂) that has been rotated through 90° in relation to said plane (T₁). The ray of light that sweeps in the plane (T₂) is applied to a mirror (16) and via the mirror onto the face of a product that is provided with a bar code.

## Description

The invention concerns a method for reading a bar code and a reader device for identification of a bar code.

From the prior art, bar-code readers are known by whose means the bar code can be read, as a rule, in one precise position. Also, from the prior art, arrangements of equipment are known in which the bar code can be read by means of laser beams produced by a number of scanners irrespective of the position of the code on the face of the product. Solutions of equipment of said sort are, however, expensive.

In the present patent application, a novel method and a solution of equipment are described by whose means the bar code V placed on the face of a product can be read irrespective of the position in which it is placed on the face of the product. In the present application, the designation bar code refers generally to a code label that comprises oblong dark and light fields. According to the invention, a ray of light, preferably a laser beam, is brought onto a rotated first mirror. By means of the mirror, the ray of laser light that has been brought onto the mirror is deflected as a sweep beam C₁ within the sector a and as a sweep beam C₂ within the sector β. In the sector a the ray of light S₁ is reflected in the plane T₁ to illuminate the dark and light areas in the bar-code label on the object to be read which areas are not parallel to the sweep plane T₁ of the ray of light.

In the sector β the light is reflected from the mirror as a narrower sweep beam C₂ onto a prism that refracts light. The bottom plane of a so-called Dove prism of glass has been placed at an angle of 45° in relation to the sweep plane T₁ so that the beam of light S₂ is passed onto the light-refracting inlet face of the prism, from which face it proceeds, having been reflected from the bottom face of the prism, to the light-outlet face of the prism, from which face the ray of light S₂ is deflected in a plane T₂ that has been rotated through 90° in relation to the plane T₁. Thus, the sweep beam C₂ is rotated through 90°, and the beam of light C₂ is passed as additionally widened further to a second rotated mirror onto its light-reflecting mirror face.

The function of the second mirror is to reflect the ray of light S₂ that oscillates in the plane T₂, so that, while oscillating in the reflection plane T₃, the ray of light S₂ passes through the entire reading area L in a way corresponding to the ray S₁ that was deflected by the first mirror. By means of the sweep beam C₂ of said second ray of light S₂ that was brought to the object to be read, the bar code is read from the product face whose dark and light fields pass as parallel to the longitudinal axis Z of the reading plane T₄ and are, thus, also parallel to the sweep plane T₁ of the ray of light S₁ deflected in the sector α, and perpendicular to the planes T₃ and T₂.

When the apparatus in accordance with the invention is used, the apparatus further comprises a receiver and therein a detector, which receives the reflections from the dark and light fields in the bar code and amplifies them for the central unit and further for its decoder.

When the apparatus in accordance with the invention is used, it is possible to read the bar code, e.g., from the side of a returnable or recycling package. The returned package may be placed, e.g., on rotatable rollers, in which case the bar code can be read by means of the sweep rays S₁ or S₂ irrespective of the position in which the code label has been applied onto the package.

The method in accordance with the invention is mainly characterized in that the ray of light is brought from a source of light, preferably from a source of laser light, and the ray of light is deflected in a sector onto a prism in a plane, and that in the method, by means of the prism, the sweep beam of the ray of light is rotated so that, on departing from the prism, the ray of light sweeps in a plane that has been rotated through 90° in relation to said plane, said ray of light that sweeps in the plane being applied to a mirror and via the mirror onto the face of a product that is provided with a bar code.

The device in accordance with the invention is mainly characterized in that it comprises a source of light, preferably a source of laser light, which emits a ray of light, preferably a ray of laser light, and that the equipment comprises a first rotated mirror, at whose mirror face the ray of light is directed, and that the solution of equipment comprises a prism and, at the proximity of the prism, a second rotated mirror, a ray of light being applied by means of the first mirror in a plane to the face of the object to read bar-code marks, and that, by means of said first mirror, a ray of light is additionally applied to a prism and through the prism to the second mirror and further, from the second mirror, to the face of the object to read bar-code marks, the sweep plane of the sweep beam of the ray of light emitted from the mirror being rotated by means of the prism substantially through 90° in relation to the plane, whereby the ray of light can be made to sweep across the mirror face of the mirror in a plane, the projection of the ray of light on the mirror face of the mirror running along a straight line which is substantially perpendicular to the plane and parallel to the axis of rotation of the mirror.

The ray of laser light, which has been brought in this way by means of a mirror-prism arrangement in accordance with the invention from a stationary source of laser light, which runs along a linear path, and which has been deflected by means of the mirrors and the prism, is applied to the face of the product. At the point at which the laser beam meets the face of the product, there is a round, bright and sharp point of laser light. Said point is displaced along the product face across the bar-code marks provided on the face by deflecting the laser beam by rotating the mirror/mirrors.

Next, the invention will be described with reference to some preferred embodiments of the invention illustrated in the figures in the accompanying drawings, the invention being, yet, not supposed to be confined to said embodiments alone.

Figure 1A is an axonometric view of a solution of equipment in accordance with the invention with a shield box fitted on the mirror-prism system.

Figure 1B is an axonometric view of the solution of equipment with the shield box removed.

Figure 1C is a separate illustration of the prism.

Figure 2A illustrates the application of the scanning ray S₁ in the sector α onto the product face.

Figure 2B illustrates the application of the scanning ray S₂ in the sector β to the prism and further from the prism to the second mirror and further onto the product face.

Figure 3A is an axonometric view of the rotation of the light applied to the prism, by means of the prism, through 90° so that the laser-ray sweep beam C₂ which was emitted in the horizontal plane is rotated through 90° by means of the prism.

Figure 3B illustrates the prism in the direction of the arrow K in Fig. 3A.

Figure 4 is a sectional view taken along the line I-I in Fig. 1B.

Figure 5 shows the scanning system in accordance with the invention with the receiver means.

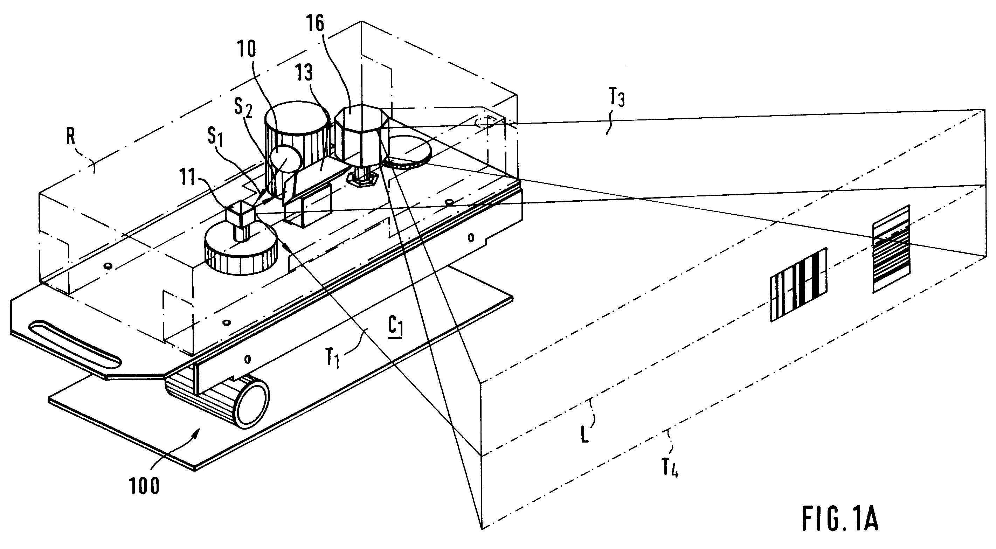

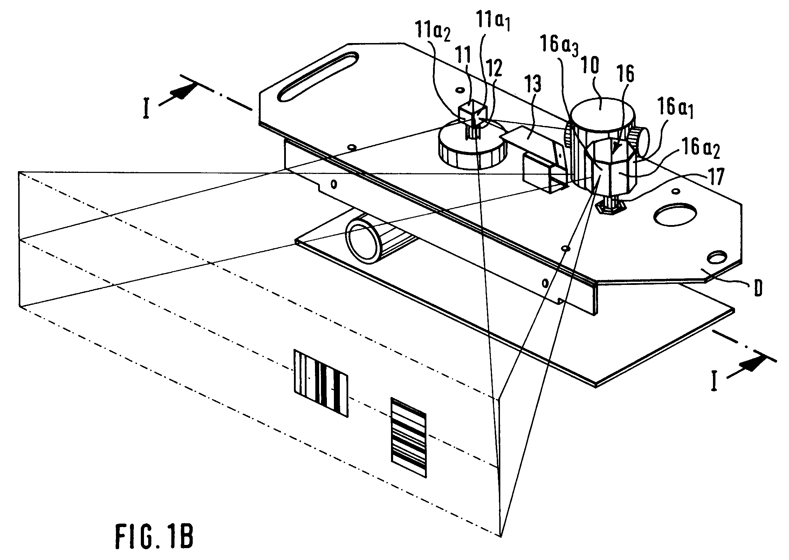

Figs. 1A and 1B are axonometric views of an equipment in accordance with the invention. The source 10 of laser light emits a ray S₁ of laser light towards the first mirror 11 in the plane T₁, which plane T₁ is perpendicular to the axis of rotation and central axis X₁ of the rotated first mirror 11. The mechanical shaft of rotation of the first mirror 11 is denoted in the figure with the reference numeral 12. The motor M₁ rotates the mirror 11 at the speed of rotation N₁. The mirror 11 comprises reflecting planes, i.e. mirror faces 11a₁, 11a₂, 11a₃ and 11a₄. The mirror faces are perpendicular to one another, and preferably square planes.

Further the equipment comprises a light-transmitting and light-refracting prism 13, whose function is to rotate the scanning ray that sweeps in the plane T₁ through 90° in relation to the plane T₁, so that the projection point of the ray of light on the second mirror 16, on its mirror face, passes from the top towards the bottom along a straight line which is perpendicular to the plane T₁ and parallel to the axis X₂ of rotation of the mirror 16.

The motor M₂ is fitted to rotate the shaft 17 of the mirror 16 at the speed N₂. The central axis and axis of rotation of the mirror 16 is denoted with X₂. Both the reflecting planes, i.e. the mirror faces 11a₁...11a₄ of the first mirror 11 and the reflecting planes, i.e. the mirror faces 16a₁...16a₈ of the second mirror 16 are perpendicular to the emitting plane and to the sweep plane T₁ of the laser ray S₁.

In the arrangements in accordance with the invention, in the way shown in Figs. 1A and 1B, in the sector α, the light that is reflected from the first mirror 11, from the reflection plane 11a₁ of said mirror, is emitted in the sweep beam C₁ in the plane T₁ to the object to be scanned onto its face to read the bar codes whose black and light fields are placed perpendicular to the sweep plane T₁ of the sweep beam C₁ of the laser ray S₁.

In a corresponding way, from said mirror face 11a₁, the laser ray is reflected in the plane T₁, in the angle area β, to the end face 14 of the prism 13. According to the invention, the prism 13 has been inclined through 45° in relation to the sweep plane T₁, so that there is an angle of 45° between the plane of the bottom face 13a₁ of the prism 13 and the sweep plane T₁.

According to the invention, the sweep plane of the laser ray is rotated by means of the prism 13 through 90°. Thus, the laser ray S₂ that sweeps before the prism 13 in the plane T₁ sweeps after the prism 13 in a plane T₂ that has been rotated through 90° in relation to the plane T₁.

Thus, the laser ray S₂ is made to sweep in the plane T₂ on any one of the eight reflecting faces, i.e. mirror faces 16a₁...16a₈ of the second mirror 16. The point projection of the laser ray S₂ on the mirror face 16a₁ or 16a₂ or 16a₃... or 16a₈ of the second mirror 16 runs in the direction from the top towards the bottom, which direction is perpendicular to the plane T₁ and parallel to the axis X₂ of rotation of the second mirror 16. The laser ray S₂ that traverses and sweeps in the plane T₂ is reflected from the mirror face 16a₁...16a₈ of the second mirror 16 in the plane T₃, which is also perpendicular to the starting plane T₁. The sweeping laser beam that traverses in the plane T₃ is rotated by means of the rotation of the mirror 16 around the axis of rotation and central axis X₂ of the mirror 16. Thus, after the second mirror 16, the laser ray S₂ that was applied to the prism 13 is made to sweep in the plane T₃. By means of the ray S₂ that sweeps in the plane T₃, the bar code is scanned whose dark and light fields are not located parallel to said plane T₃. They may be placed, e.g., perpendicularly to said plane T₃.

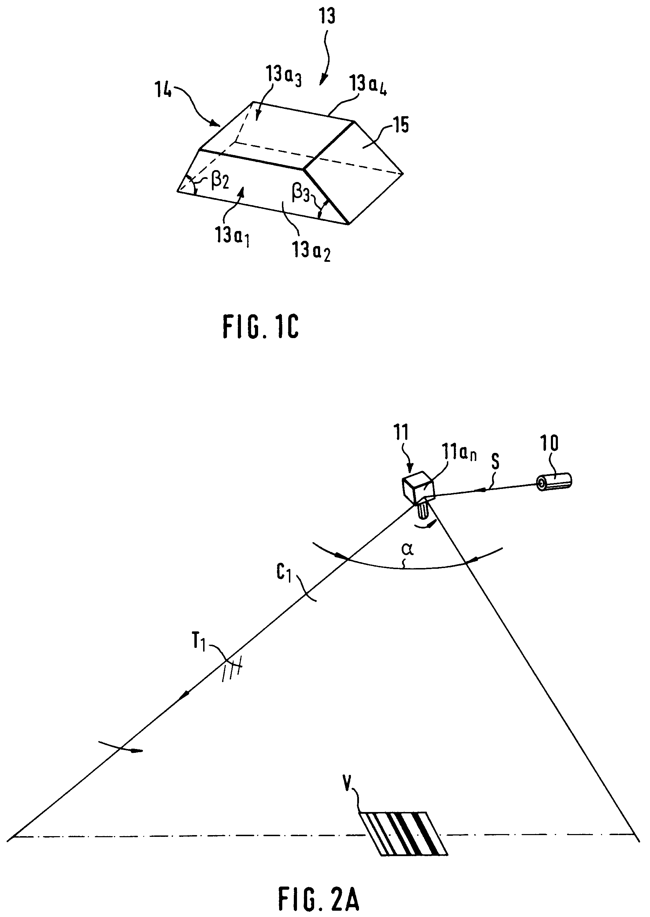

Fig. 1C is a more detailed illustration of the construction of the prism 13. The prism 13 is a part that is preferably made of glass and that transmits light through all of its faces. It comprises a body R, which is provided with light-transmitting and light-refracting side faces 13a₁, 13a₂, 13a₃ and 13a₄. The opposite side faces 13a₁ and 13a₃ are parallel to one another, and in a corresponding way the side faces 13a₂ and 13a₄ are parallel to one another. The side faces 13a₂ and 13a₄ are perpendicular to the top and bottom faces 13a₁ and 13a₃. The cross-sectional form of the prism 13 in the direction perpendicular to the longitudinal axis Y of the prism is rectangular.

The angle β₂ between the end face 14 of the prism 13 and the bottom face 13a₁ of the prism is 45°, and in a corresponding way the angle β₃ between the other end face 15 of the prism and the bottom face 13a₁ of the prism is also 45°.

Fig. 2A is a separate illustration of the use of the sector area a at the sweep ray S₁. In the way shown in Fig. 2A, the ray of light is deflected from the mirror face 11a₁ of the mirror 11 in the sector α in the sweep beam C₁. The sweep of the laser ray takes place in the emitting plane T₁ of the laser ray, which plane T₁ is perpendicular to the central axis and axis X₁ of rotation of the mirror. By means of the laser ray S₁, the bar code is read from the face of the product whose dark and light fields are not placed parallel to the plane T₁ of the sweep beam C₁. Said fields may be placed, e.g., perpendicularly to the plane T₁.

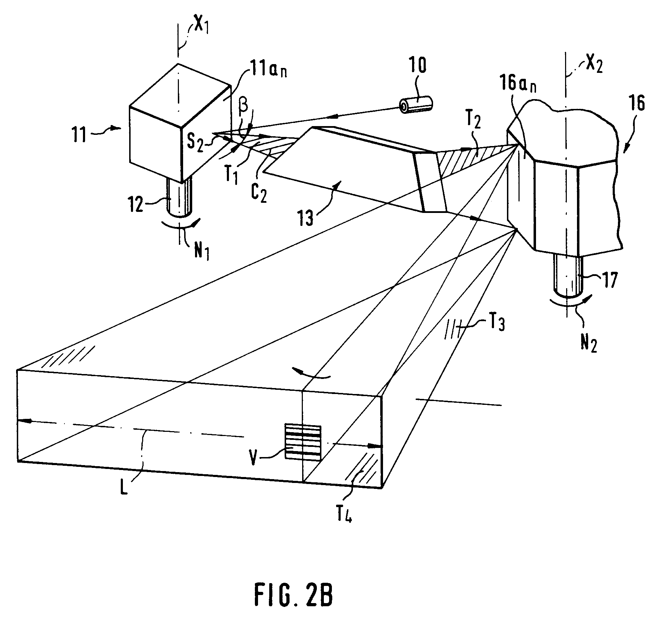

Fig. 2B is a separate illustration of the application of the sweep ray S₂ to the prism in the sector β. In the way shown in Fig. 2B, the ray of light is deflected in the angle area β so that the ray of light S₂, preferably a laser beam, meets the end plane 14 of the prism 13. By means of the prism 13, which has been inclined so that its bottom face 13a₁ is at an angle of 45° in relation to the plane T₁, rotation of the laser ray S₂ is produced so that the sweep plane T₂ of the laser ray S₂ at the outlet side of the prism 13 is perpendicular to the sweep plane T₁ at the inlet side. Thus, a rotation through 90° takes place in the sweep. The rotation is also favourable in the respect that both the polarization plane of the laser beam emitted in the sector α and the polarization plane of said beam that has been rotated and emitted to the face of the object remain the same in relation to one another. Thus, in the arrangement of equipment, it is possible to use the same receiver device for the rays S₁ and S₂. Thus, the ray of light is applied in the plane T₂ to the mirror 16, and from the mirror 16 the ray that oscillates in the plane T₃ is deflected around the central axis of the mirror 16 by rotating the mirror. The ray that sweeps the reading plane T₄ in the plane T₃ scans the bar code V whose dark and light fields are not parallel to the plane T₃. The dark and light fields may be, e.g., perpendicular to the plane T₃.

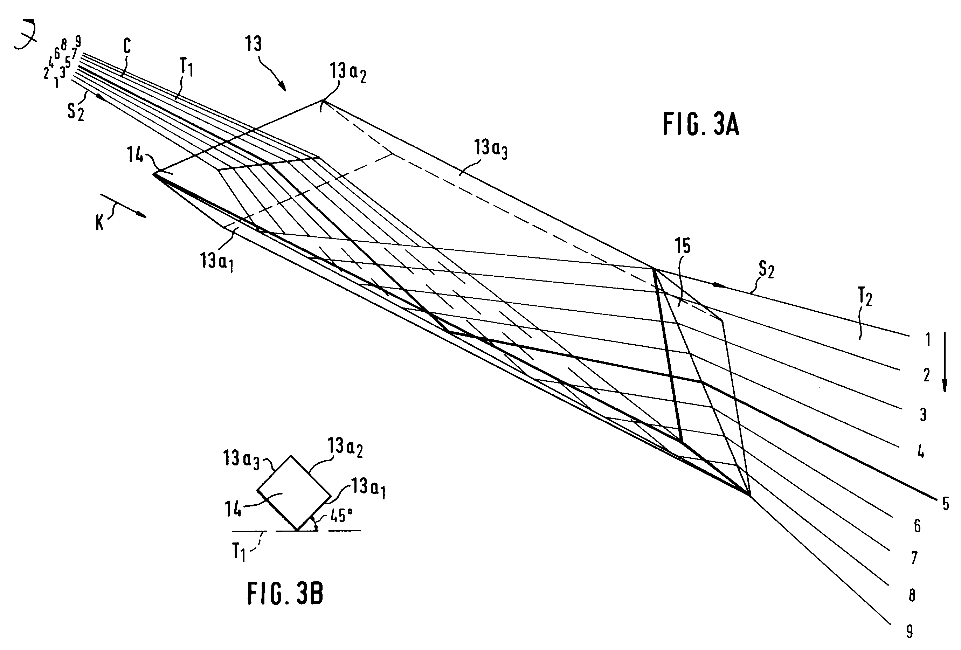

Fig. 3A is an axonometric view of the prism 13. The prism 13 has been inclined so that its bottom side 13a₁ is inclined in relation to the sweep plane T₁ of the sweep beam C₂ of the laser ray S₂. In the figure, the first laser ray that arrives at the prism is denoted with the numeral 1 and the last ray with the numeral 9. In the way shown in the figure, a rotation through 90° is obtained between the sweep planes T₁ and T₂. The ray of light S₂ that departs from the outlet face 15 of the ray of light S₂ at the prism 13 moves from the top towards the bottom in the sweep plane T₂ which is perpendicular to the plane T₁.

Fig. 3B shows the prism 13 as viewed in the direction of the arrow K in Fig. 3A.

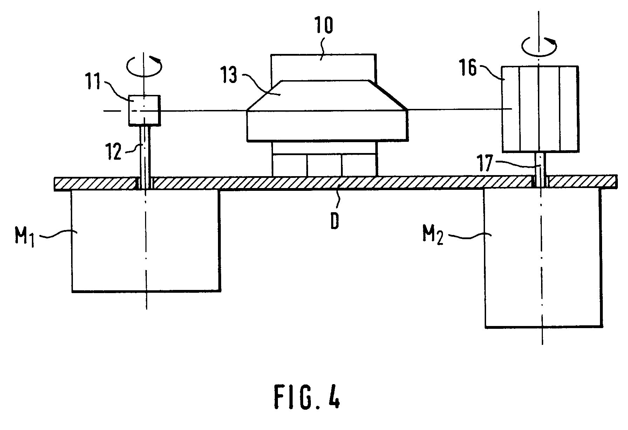

Fig. 4 is a sectional view taken along the line I-I in Fig. 1B. In the way shown in the figure, the motors M₁ and M₂ are placed underneath the frame plate D.

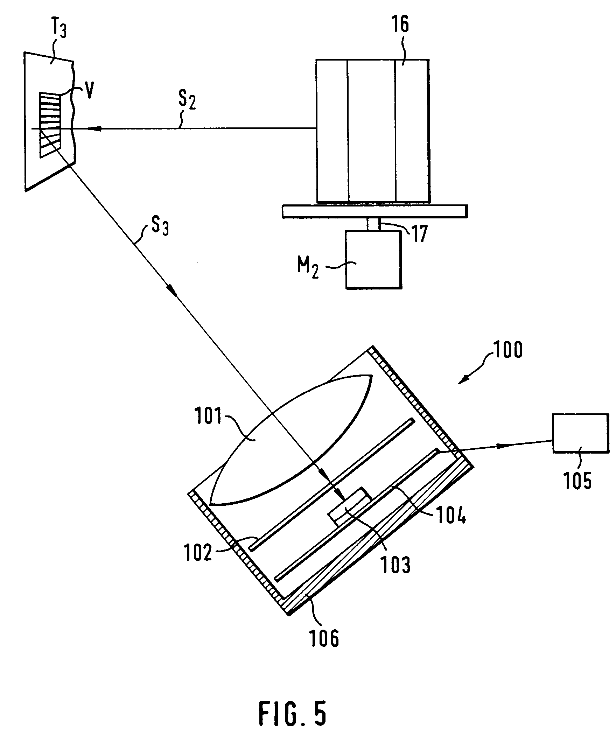

Fig. 5 shows the scanning system in accordance with the invention with a receiver device. The light is brought from the source of laser light and applied to the first mirror 11, which is rotated at the speed N₁, being deflected in the plane T₁ from the mirror face 11aₙ of the first mirror in the sector α onto the face of the object that includes a bar code. By means of a corresponding mirror face 11aₙ the laser ray S₂ is deflected at the angle β to the prism 13 and further the light-ray sweep beam C₂ that has been rotated by means of the prism 13 is applied to the second mirror 16, which is rotated at the speed N₂. The speed N₁ is higher than the speed N₂, being about 100-fold.

The second mirror 16 comprises eight reflecting faces, i.e. mirror faces 16a₁...16a₈. Thus, by means of the second mirror, the laser ray that oscillates in the plane T₃ is deflected further onto the product face in the sweep plane T₃, which is rotated around the central axis X₂ of the mirror.

In this way the laser point that oscillates in the plane T₃ can be shifted on the face of the object in the longitudinal direction of the object.

Thus, the sharp round light point of the ray S₁,S₂ of laser light is passed across the dark and light fields in the bar-code label placed on the reading face. At the same time, a code mark consisting of the variations of the light and dark fields is received in the receiver detector of the receiver device 100, preferably a photodiode 103. By means of the receiver device 100, the signal reflected from the bar code V is amplified and passed to the central unit 105. The receiving ray S₃ is applied to the lens 101 and through the polarization film 102 to the detector, preferably to a photodiode 103, and further, from the photodiode 103, the signal corresponding to the bar code is passed to the circuit card or amplifier card 104, and through the circuit card 104 to the central unit, which is preferably a microprocessor 105 and which comprises a decoding program, by whose means the bar code V is decoded. The receiver device 100, its lens 101, the polarization film 102, the detector, i.e. the photodiode 103, and the circuit card 104 are placed inside a metallic shield box 106, preferably made of iron, and are thereby protected against interference.

The invention concerns a method and a device for reading a bar code from the face of an object. The ray of light (S₁) is brought from a source of light (10), preferably from a source of laser light, and the ray of light is deflected in a sector (β) onto a prism (13) in a plane (T₁). In the method, by means of the prism (13), the sweep beam (C₂) of the ray of light (S₂) is rotated so that, on departing from the prism (13), the ray of light (S₂) sweeps in a plane (T₂) that has been rotated through 90° in relation to said plane (T₁). The ray of light that sweeps in the plane (T₂) is applied to a mirror (16) and via the minor onto the face of a product that is provided with a bar code.

## Claims

1. Method for reading a bar code from the face of an object, **characterized** in that the ray of light (S₁) is brought from a source of light (10), preferably from a source of laser light, and the ray of light is deflected in a sector (β) onto a prism (13) in a plane (T₁), and that in the method, by means of the prism (13), the sweep beam (C₂) of the ray of light (S₂) is rotated so that, on departing from the prism (13), the ray of light (S₂) sweeps in a plane (T₂) that has been rotated through 90° in relation to said plane (T₁), said ray of light that sweeps in the plane (T₂) being applied to a mirror (16) and via the mirror onto the face of a product that is provided with a bar code.

2. Method as claimed in claim 1, **characterized** in that, in the method, the ray of light (S₂), preferably a laser ray, is applied from a first mirror (11) to the prism (13).

3. Method as claimed in claim 2, **characterized** in that the ray of light (S₁) is applied to the first mirror (11) in a plane (T₁) that is perpendicular to the axis of rotation and central axis (X₁) of the mirror (11), and that the ray of laser light (S₁) is applied to the mirror face (11aₙ) of the mirror (11) in such a way that, in the sector (α), the ray of light (S₁) is displaced on the face of the object by moving the mirror (11), so that the ray (S₁) passes across the bar code whose dark and light fields are not parallel to the sweep plane (T₁) of the sweep beam (C₁) of the ray of light.

4. Method as claimed in any of the preceding claims, **characterized** in that, in the method, a light-transmitting prism (13), preferably a glass prism, is used, whose opposite side faces (13a₁,13a₃;13a₂,13a₄) are placed in planes parallel to one another and in which the end faces (14 and 15) of the prism are placed in such a way in relation to the bottom face (13a₁) of the prism that the angle (β₂) between the first end face (14) and the bottom face (13a₁) is 45° and the angle (β₃) between the second end face (15) and the bottom face (13a₁) is also 45°.

5. Method as claimed in the preceding claim, **characterized** in that, in the method, a prism (13) is used, whose bottom face (13a₁) has been inclined through 45° in relation to the sweep plane (T₁) of the laser ray (S₂).

6. Method as claimed in any of the preceding claims, **characterized** in that the second mirror (16) is rotated around the axis of rotation and central axis (X₂) of the mirror (16), which axis (X₂) is perpendicular to the plane (T₁).

7. Method as claimed in any of the preceding claims, **characterized** in that, in the method, the first mirror (11) is rotated around the axis of rotation and central axis (X₁) of the mirror, which axis (X₁) is perpendicular to the sweep plane (T₁).

8. Method as claimed in any of the preceding claims, **characterized** in that, in the method, the ray of light is applied from the prism (13) in the plane (T₂) to one of the mirror faces (16a₁...16a₈) of the second mirror (16), on which mirror face the projection point of the ray of light passes as parallel to the axis (X₂) of rotation of the mirror, and that the ray that sweeps on said mirror face is reflected further from the mirror face (16a₁...16a₈) in the plane (T₃) onto the face of the product, which face includes a bar code in which the dark and light fields are not parallel to the plane (T₃).

9. Method as claimed in any of the preceding claims, **characterized** in that, in the method, the first mirror (11) is rotated at a speed of rotation substantially higher than that of the second mirror (16), and that in the method such a first mirror (11) is used in which the number of mirror faces (11a₁...11a₄) is substantially lower than the number of mirror faces (16a₁...16a₈) in the second mirror (16).

10. Method as claimed in any of the preceding claims, **characterized** in that, in the method, the rays of light (S₁,S₂) applied to the bar code are read by means of a receiver device (100), and that the reflected signal is amplified by means of the receiver device (100) and passed to the central unit (105).

11. Method as claimed in any of the preceding claims, **characterized** in that, in the method, the reading ray (S₃) is applied from the bar-code label through the lens (101) and the polarization film (102) to the detector, preferably a photodiode (103), and further through the amplifier card (104) to the central unit (105) of the apparatus, preferably a microprocessor.

12. Bar-code reader, **characterized** in that it comprises a source of light (10), preferably a source of laser light, which emits a ray of light, preferably a ray of laser light (S₁), and that the equipment comprises a first rotated mirror (11), at whose mirror face (11a₁...11a₄) the ray of light (S₁) is directed, and that the solution of equipment comprises a prism (13) and, at the proximity of the prism (13), a second rotated mirror (16), a ray of light (S₁) being applied by means of the first mirror (11) in a plane (T₁) to the face of the object to read bar-code marks, and that, by means of said first mirror (11), a ray of light is additionally applied to a prism (13) and through the prism to the second mirror (16) and further, from the second mirror (16), to the face of the object to read the bar-code marks, the sweep plane (T₁) of the sweep beam (C₂) of the ray of light (S₃) emitted from the mirror (11) being rotated by means of the prism (13) substantially through 90° in relation to the plane (T₁), whereby the ray of light can be made to sweep across the mirror face of the mirror (16) in a plane (T₂), the projection of the ray of light (S₂) on the mirror face (16a₁ or 16a₂... or 16a₈) of the mirror (16) running along a straight line which is substantially perpendicular to the plane (T₁) and parallel to the axis of rotation (X₂) of the mirror.

13. Bar-code reader as claimed in any of the preceding claims, **characterized** in that the equipment comprises a motor (M₁), by whose means the shaft (12) of rotation of the mirror (11) and, thus, the mirror faces (11a₂...11a₄) are rotated around the axis of rotation and central axis (X₁) of the mirror, and that the equipment comprises a second motor (M₂), by whose means the shaft (17) of the second mirror (16) and, thus, the mirror faces (16a₁...16a₈) are rotated, and that the planes of the mirror faces (11a₁...11a₄) are perpendicular to the plane (T₁) and, in a corresponding way, the mirror faces (16a₁...16a₈) of the second mirror (16) are perpendicular to the plane (T₁).

14. Bar-code reader as claimed in any of the preceding claims, **characterized** in that the prism (13) comprises light-transmitting and light-refracting side faces (13a₁,13a₃), which are placed one opposite to the other and whose planes are parallel to one another, and, in a corresponding way, side faces (13a₂ and 13a₄), whose planes are also parallel to one another, and that the prism (13) comprises a first end face (14), whose plane is at an angle (β₂) of 45° in relation to the bottom face (13a₁) of the prism, and correspondingly a second end face (15), which is similarly at an angle (β₃) of 45° in relation to the bottom face (13a₁) of the prism, and that the plane of the bottom face (13a₁) of the prism (13) has been inclined through 45° in relation to the sweep plane (T₁).

15. Device as claimed in any of the preceding claims, **characterized** in that the speed of rotation (N₁) of the mirror (11) is about 100-fold as compared with the speed of rotation (N₂) of the second mirror (16).
